# EUROPEAN PATENT SPECIFICATION

(11) **EP 2 632 928 B1**
(45) Date of publication and mention of the grant of the patent: **02.10.2019**
(21) Application number: 11837081.6
(22) Date of filing: 27.10.2011
(51) Int. Cl.: C07F 7/02, B01J 19/24, B01J 19/14, C01B 33/107, B01F 3/04, B01J 8/18

(54) **HYDROCHLORINATION HEATER AND RELATED METHODS THEREFOR**
HYDROCHLORIERUNGSHEIZER UND ZUGEHÖRIGE VERFAHREN
CHAUFFAGE DE LA CHLORHYDRATION ET PROCÉDÉS ASSOCIÉS

(30) Priority: 27.10.2010 US 913227
(43) Date of publication of application: 04.09.2013
(73) Proprietor: GTAT Corporation, Merrimack, NH 03054 (US)
(72) Inventor: HAZELTINE, Bruce, Missoula MT 59804 (US)
(74) Representative: Barker Brettell LLP
(86) International application number: PCT/US2011/058073
(87) International publication number: WO 2012/058417

(56) References cited:
- EP-A1- 2 179 965
- EP-A2- 0 133 209
- DE-A1- 3 024 319
- JP-A- 2010 105 865
- US-A- 4 165 363
- US-A- 4 705 654
- US-A1- 2008 112 875
- US-A1- 2009 324 477
- US-A1- 2010 111 804
- US-A1- 2010 233 062
- ARNETH S ET AL: "Characteristics of thermosiphon reboilers", INTERNATIONAL JOURNAL OF THERMAL SCIENCES, EDITIONS ELSEVIER, PARIS, FR, vol. 40, no. 4, 1 April 2001 (2001-04-01), pages 385-391, XP004235249, ISSN: 1290-0729, DOI: 10.1016/S1290-0729(01)01231-5

## Description

### BACKGROUND OF INVENTION

### 1. Field of the Invention

The present invention relates to systems and methods of producing trichlorosilane and, in particular, to systems and methods that utilize vaporization techniques to reduce the energy consumption of and improve the availability of trichlorosilane reaction systems.

### 2. Discussion of Related Art

Coleman, in U.S. Patent No. 4,340,574, disclosed a process for the production of ultrahigh purity silane with recycle from separation columns.

Breneman, in U.S. Patent No. 4,676,967, disclosed a process for producing high purity silane and silicon.

Burgie et al., in U.S. Patent No. 5,118,486, disclosed separation by atomization of a byproduct stream into particulate silicon and silanes.

Oda, in U.S. Patent No. 6,060,021, disclosed a method of storing trichlorosilane and silicon tetrachloride under a hydrogen gas as a sealing gas.

Klein et al., in U.S. Patent No. 6,843,972 B2, disclosed a method of purifying trichlorosilane by contacting with solid bases.

Block et al., in U.S. Patent No. 6,852,301 B2, disclosed a method of producing silane by reacting metallurgical silicon with silicon tetrachloride, SiCl₄, and hydrogen, to form a crude gas stream of trichlorosilane, SiHCl₃, and silicon tetrachloride; removing impurities from the crude gas stream by washing with condensed chlorosilanes; condensing and separating the purified crude gas stream by distillation; returning the partial stream of silicon tetrachloride to the reaction of metallurgical silicon with silicon tetrachloride and hydrogen; disproportionating the partial stream to form silicon tetrachloride and silane; and returning the silane formed by disproportionation to the reaction of metallurgical grade silicon with silicon tetrachloride and hydrogen.

Block et al., in U.S. Patent No. 6,905,576 B1, disclosed a method and system for producing silane by catalytic disproportionation of trichlorosilane in a catalyst bed.

Bulan et al., in U.S. Patent No. 7,056,484 B2, disclosed a method for producing trichlorosilane by reacting silicon with hydrogen, silicon tetrachloride, with the silicon in comminuted form mixed with a catalyst. A method for producing trihalosilane is disclosed in US2010/0111804.

Kajimoto et al., in U.S. Patent Application Publication No. 2007/0231236 A1, disclosed a method of producing halosilane and a method of purifying a solid fraction.

Andersen, et al., in International Publication No. 2007/035108 A1, disclosed a method for the production of trichlorosilane, and for producing silicon for use in the production of trichlorosilane.

### SUMMARY OF THE INVENTION

One or more embodiments of the invention can be directed to a method of preparing trichlorosilane.

The method for preparing trichlorosilane comprises:
heating in a heating section of a reboiler, at least a portion of a gaseous stream comprising hydrogen with saturated steam having a pressure in a range of from about 5 bar to about 15 bar to provide a heated gaseous stream having sufficient heat of vaporization to saturate the heated gaseous stream comprising hydrogen with a liquid stream comprising silicon tetrachloride;
introducing the liquid stream comprising silicon tetrachloride to the reboiler to provide a desired liquid level in the reboiler;
vaporizing the liquid stream comprising silicon tetrachloride with the heated gaseous stream in a vaporization zone of the reboiler to produce a gaseous reactant stream comprising hydrogen saturated with silicon tetrachloride, the gaseous reactant stream having a temperature of between about 125°C to about 350°C at an outlet of the vaporization zone;
introducing the gaseous reactant stream into a reactor; and
recovering a product stream comprising trichlorosilane, silicon tetrachloride, and hydrogen from the reactor.

Disclosed is a method that can comprise contacting a first stream comprising hydrogen with a second stream comprising silicon tetrachloride to produce a gaseous reactant stream comprising hydrogen saturated with silicon tetrachloride, introducing the gaseous reactant stream into a reactor, and recovering a product stream comprising trichlorosilane, silicon tetrachloride, and hydrogen from the reactor. The method of preparing trichlorosilane can further comprise heating at least a portion of the first stream. Heating heating the at least a portion of the first stream can comprise heating with saturated steam having a pressure in a range of from about 5 bar to about 15 bar. The method of preparing trichlorosilane can further comprise, prior to introducing the gaseous reactant stream into the reactor, heating at least a portion of the reactant stream to a temperature in a range of from about 175°C to about 550°C. Contacting the first stream with the second stream can comprise heating at least a portion of at least one of the first stream and the second stream. The method of preparing trichlorosilane can further comprise recovering at least a portion of the hydrogen from the product stream and utilizing at least a portion of the recovered hydrogen to produce the first stream.

Disclosed is a method of providing a reactant mixture. The method can comprise providing a gaseous first reactant, providing a liquid reactant, vaporizing the liquid reactant by providing at least a heat of vaporization to at least a portion of the liquid reactant to produce a gaseous second reactant, recovering the reactant mixture comprising the gaseous first reactant saturated with the gaseous second reactant, and introducing at least a portion of the reactant mixture into a reactor. The method of providing a reactant mixture can further comprise heating the reactant stream to a temperature in a range of from about 175°C to about 550°C. The method of providing a reactant mixture can further comprise increasing a latent heat of the gaseous first reactant with saturated steam. The first reactant can comprise, consist essentially of, or consist of hydrogen. The second reactant can comprise, consist essentially, or consist of silicon tetrachloride. Vaporizing the liquid reactant can be performed while reducing the latent heat of the gaseous first reactant.

One or more aspects of the invention can be directed to a reactor system.

The reactor system for use in the method of preparing trichlorosilane of the invention comprises:
a contactor having a first reactant inlet fluidly connected to a source of a gaseous first reactant, a second inlet fluidly connected to a source of a liquid second reactant, a reactant mixture outlet, and a vaporization region;
a source of saturated steam fluidly connected to the contactor;
a reactor having a reactor inlet fluidly connected downstream from the reactant mixture outlet, and a reactor product outlet; and
a control system (LC) configured to regulate a temperature of the reactant mixture to be introduced into the reactant inlet of the reactor to be in a range of from about 500°C to about 600°C.

A reactor system disclosed can comprise a contactor having a first reactant inlet fluidly connected to a source of a gaseous first reactant, a second inlet fluidly connected to a source of a liquid second reactant, a reactant mixture outlet, and a vaporization region; and a reactor having a reactor inlet fluidly connected downstream from the reactant mixture outlet, and a reactor product outlet. The reactor system can further comprise a heat exchanger having a first thermal side fluidly connecting the reactant mixture outlet and the reactor inlet, and a second thermal side fluidly connected downstream from a reactor product outlet. The reactor system can further comprise a heater fluidly connecting the reactant mixture outlet and the reactor inlet. The reactor system can further comprise a control system configured to regulate a temperature of the reactant mixture to be introduced into the reactant inlet of the reactor to be in a range of from about 500°C to about 600°C.

### BRIEF DESCRIPTION OF THE DRAWINGS

The accompanying drawings are not drawn to scale. In the drawings, each identical or nearly identical component that is illustrated in the various figures is represented by a like numeral. For purposes of clarity, not every component may be labeled in every drawing.

In the drawings:
FIG. 1 is a schematic illustration of a reactor system in accordance with one or more embodiments of the invention;
FIG. 2 is a schematic illustration of a portion of a reactor system upon which one or more embodiments of the invention may be practiced; and
FIG. 3 is a schematic illustration of a portion of a contacting system that may be used with the reactor system in accordance with one or more embodiments of the invention.

### DETAILED DESCRIPTION

Hydrochlorination reactors typically operate at high pressures and temperatures, in a range of from about 20 bar to about 40 bar and from about 550°C to about 580°C. One or more aspects of the invention facilitate providing a feed stream or a reactant stream to the reactor at about the reaction conditions. Thus, for example, the reactor system of the present invention can comprise at least one pretreatment or conditioning system disposed to receive one or more reactants and render the one or more reactants at conditions that promote hydrochlorination.

Some aspects of the present invention facilitate or promote hydrochlorination by providing feed streams with suitable reaction conditions. Further aspects of the invention involve providing economically favorable hydrochlorination systems. One or more particular embodiments of the invention involve hydrochlorination systems and techniques that comprise reliable and energy efficient reactant stream conditioning systems and components. Further aspects of the invention can provide hydrochlorination reactant streams that are less corrosive than conventional pretreatment systems, which can advantageously reduce capital and operating costs because the use of highly corrosion resistant materials therein may be reduced or avoided. Still further aspects of the invention can provide hydrochlorination systems and techniques with reduced safety hazards.

In some configurations of the invention, the reactor is a fluid bed reactor (FBR) that is pressurized and heated to the reactor operating conditions that promote hydrochlorination.

Some aspects of the invention can involve systems and techniques that economically and efficiently vaporize a liquid reactant, such as, but not limited to, silicon tetrachloride. Further aspects of the invention can provide systems and techniques that vaporize high boiling point liquids with saturated steam systems commonly present in chemical plants. Disclosed is vaporizing at least a portion of a liquid reactant with saturated steam at a pressure of less than about 20 bar; in some cases, with saturated steam at a pressure of less than about 15 bar. The invention involves vaporizing at least a portion of a liquid reactant with saturated steam at a pressure in a range of from about 5 bar to about 15 bar. Some aspects of the invention thus avoid limitations or complications associated with utilizing silicon tetrachloride at elevated pressure conditions by avoiding its critical pressure and temperature of 233°C and 35.8 bar.

Some aspects of the invention involve utilizing heat from one or more product streams from one or more reactors to at least partially heat one or more reactant streams thereinto. Still further aspects of the invention can involve utilizing heat from the one or more product streams from the one or more reactors to vaporize, and in some cases, superheat, one or more reactor feed streams. For example, one or more embodiments of the invention can involve heat interchange processes that raise the temperature of one or more reactant streams by cooling one or more product streams from the reactor. Yet further aspects of the invention can involve utilizing only a portion of heat from the one or more product streams from a reactor to heat the one or more reactant streams into the reactor. Some aspects of the invention can involve heat transfer between one or more product streams and one or more reactant streams without condensation or deposition of components of any of the one or more product streams. Some embodiments of the invention can involve raising the temperature of one or more reactant streams while cooling one or more exhaust product streams without deposition or desublimation of metal salts therein.

One or more aspects of the invention can involve heating one or more reactant streams into a reactor in a plurality of heating stages. Particular embodiments of the invention can involve a first heating stage to raise the temperature of a first reactant, a second reactant, such as a second reactant stream, or both. In further particular embodiments of the invention, the latent heat of the first reactant stream can be utilized to raise the temperature of the second reactant stream or to effect a phase change of at least a portion of the second reactant stream. Still further particular embodiments of the invention can optionally involve a second heating stage to raise the temperature of any one or more of the first reactant, the second reactant, or both, after heating any of such streams in the first heating stage. Yet further particular embodiments of the invention can involve heating, in a third or final stage, any of the reactant streams to be introduced into one or more reactors to reaction favorable conditions. Further aspects of the invention can involve saturating one or more reactant streams with one or more other reactant streams during any of the heating stages. Still other aspects of the invention involve providing a portion of the total heat energy to a reactant mixture to be introduced into a reactor by utilizing saturated steam, and providing another portion of the total heat energy with heat energy from a product stream of the reactor. Still further aspects of the invention can involve systems and techniques that do not utilize a heater between an interchanger, which utilizes heat from a reactor product stream, and the reactant mixture inlet of the reactor.

First stage heating can involve providing directly or indirectly at least a portion of heat of vaporization of one or more reactants. A gaseous first reactant stream can be heated by one or more heat sources, and the heated first gas stream can then transfer heat to a liquid second reactant stream. A liquid second reactant stream can optionally be directly heated by one or more heat sources. The heated gas reactant stream can contact or be mixed with a liquid second reactant stream to provide heat of vaporization thereto and vaporize at least a portion of the second reactant. Further variants of one or more embodiments of the invention can involve heating the first reactant that is in contact with or mixed with the second reactant. First stage heating can involve heating any of the reactant streams, or a mixture thereof, with saturated steam. Further variants of first stage heating embodiments can involve heating a gaseous first reactant stream while in contact with one or more other reactants to produce a gaseous reactant mixture stream with the first reactant that is saturated with the one or more other reactants. Heat for the first stage heating, such as, but not limited to, the heat of vaporization of a liquid reactant, can be provided by conventionally available heating fluids. Saturated steam can be utilized to provide the sufficient heat of vaporization to saturate a gaseous first reactant with a liquid second reactant. The saturated steam can be less than about 20 bar, in some cases, less than about 15 bar, in other cases, in a range of from about 5 bar to about 20 bar, and in yet other cases, in a range of from about 5 bar to about 15 bar. In the invention the saturated steam is in a range of from about 5 bar to about 15 bar.

The optional second stage heating can involve raising the temperature of the gaseous reactant stream to at least an intermediate target temperature by utilizing one or more heating systems to raise the temperature of the one or more reactant streams to the intermediate target temperature. For example, the reactant stream can be heated by utilizing an electrical heating source. In other cases, second stage heating can utilize any of saturated steam and superheated steam to raise the temperature of the reactant stream to the intermediate target temperature. Oil-based heating systems can alternatively be used to raise the temperature of one or more preheated reactant streams to the intermediate target temperature.

In accordance with one or more aspects, advantageous embodiments of the invention can be directed to raising the temperature of the saturated reactant stream or feed gas to a temperature that reduces the likelihood of deposition of a component of a downstream heating stream. The target temperature of the reactant stream just prior to heating in the final heating stage can be a temperature that is above the deposition or condensation condition, e.g. the temperature and pressure, of any component of any of the one or more product streams from the reactor. In hydrochlorination reaction systems, for example, the target temperature can be considered an intermediate target temperature which can be, depending on the depositable metallic salts present in the product stream, at least about 175°C, and in some cases may be in a range of from about 175°C to about 500°C, in a range of from about 175°C to about 400°C, in a range of from about 175°C to about 350°C, or even in a range of from about 200°C to about 375°C.

Final heating of the feed gas to be introduced into any one or more of the reactors can be effected by heat interchange with one or more effluent streams from one or more unit operations of the system, such as any of the one or more reactors, to provide conditions that favor one or more reaction products.

Various aspects of the invention can thus provide operationally cost effective systems and techniques that involve stages to condition or provide reactant streams with one or more target properties. Further aspects of the invention provide systems and techniques that can avoid the use of hot oil systems or electrical heating systems to vaporize one or more reactants. Still further aspects of the invention provide systems and techniques that can utilize heat from a unit operation thereof, such as a hot stream, to raise the temperature of another process stream of the system, such as a cool stream, at conditions that do not cause or at least reduce the likelihood of deposition or condensation of any component in the hot stream.

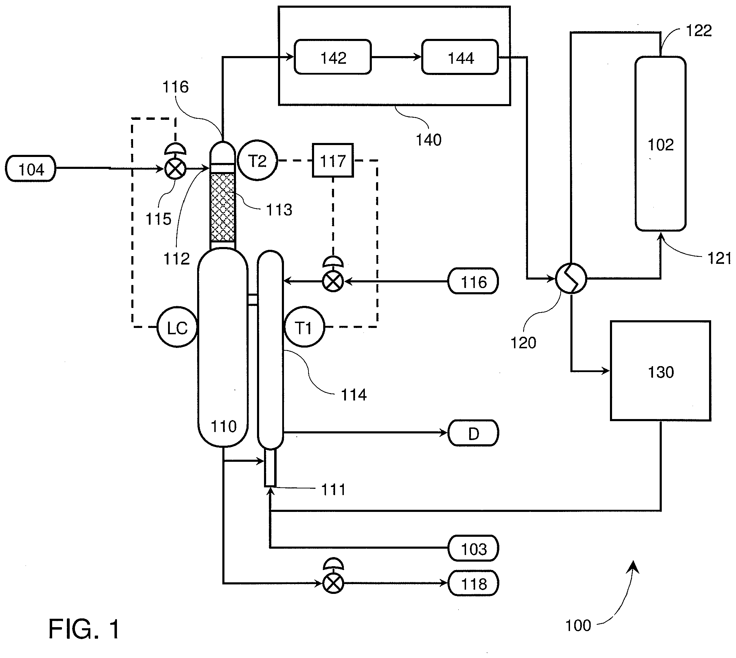

As exemplarily illustrated in FIG. 1, which shows a portion of a reaction system 100 for producing trichlorosilane, the systems and techniques of the present invention can comprise at least one reactor, such as a fluid bed reactor 102 that is operated at reaction conditions that produce trichlorosilane from a source 103 of a first reactant and a source 104 of a second reactant. For illustrative purposes, the systems and techniques will be described for trichlorosilane reaction systems. The reaction system 100 can also comprise at least one reactant contacting unit operation and one or more heat exchanging or heating unit operations. As illustrated in the non-limiting embodiment of FIG. 1, the contacting unit operation can be a thermosiphon reboiler 110 that has at least one gaseous reactant inlet 111 which is typically fluidly connected downstream from a source of a gaseous reactant, such as source 103 of the first reactant comprising, consisting essentially of, or consisting of hydrogen. The contacting unit operation can also have at least one liquid reactant inlet 112 which is typically fluidly connected downstream from a source of a liquid reactant, such as source 104 of the second reactant comprising, consisting essentially of, or consisting of silicon tetrachloride. The contacting unit operation typically has at least one saturation or liquid/gas vaporizing zone or section 113 which promotes equilibrium conditions between gaseous and liquefied components. Vaporization section 113 can comprise packing materials that promote mass transfer, preferably saturation of the gas with the liquid components. For example, silicon tetrachloride of the second reactant stream can evaporate into the hydrogen stream to saturation conditions in section 113. The contacting unit operation can further comprise a heating section that facilitates heating of any of the reactants. Saturated steam from steam source 116, provides saturated steam at a pressure in a range of from about 5 bar to about 15 bar. Any condensate from the saturated steam can be discharged to a drain D or be recycled, reused, and converted to saturated steam. The contacting unit operation can further comprise a blowdown 118 to periodically remove any undesirable accumulating components.

In operation, the liquid level in reboiler 110 can be controlled to a desired liquid level by utilizing, for example, a closed loop level control system LC that comprises at least one level sensor or indicator operatively coupled to a flow regulator, such as valve 115 that is disposed between source 104 of the second reactant typically comprising silicon tetrachloride and liquid inlet 112. The desired liquid level may depend on one or more operational and design consideration of any of reboiler 110 and reactor 102. Non-limiting considerations include, for example, the dynamic response of reboiler 110 to increase or decrease of reactant flow rate into reactor 102, the heating capacity of saturated steam source 116, the heat transfer efficiency of section 114, and the contact efficiency of section 113. The temperature of the saturated reactant stream provided at outlet 116 can be regulated to a desired saturation temperature by utilizing, for example, a closed loop temperature control system 117 that comprises at least one temperature sensor such as sensors T1 and T2. As exemplarily illustrated, sensor T1 is disposed to measure a temperature of a fluid and sensor T2 is disposed to measure a temperature of a vapor in reboiler 110. Like the desired liquid level, the desired saturation temperature may depend on one or more operational and design consideration of any of reboiler 110 and reactor 102 such as, but not limited to, the required or desired mass flow rate of the reactant stream into reactor 102, and the conversion efficiency or capacity of reactor 102. The target or desired saturation temperature is from about 125°C to about 350°C, and typically in a range of from about 135°C to about 155°C.

As noted, some aspects of the invention involve components and techniques of heating the reactant stream to conditions that favor a desired reaction. For example, system 100 can further comprise an interchanger 120 that facilitates heat transfer from a product stream and an inlet reactant stream to be introduced into reactor 102. As illustrated, interchanger 120 typically has a first thermal side that fluidly connects a reactant stream inlet 121 with outlet 116 of reboiler 110, and a second thermal side which is in thermal communication with the first thermal side and that fluidly connects a product outlet 122 of reactor 102 to one or more downstream unit operations, such as a product separation or purification train 130.

If utilized, system 100 further comprises a supplemental or second heating stage 140 with at least one heating unit operation that raises the temperature of the saturated reactant stream from reboiler 110 to the intermediate target temperature. Second stage heat energy can be provided by utilizing direct or indirect heating operations. For example, heating stage 140 can comprise any one or both of a first heater 142 that provides heat energy from hot oil heat and a second heater 144 that provides electrically generated heat energy to provide a reactant stream, which is to be further heated in interchanger 120, with the intermediate target temperature. In the exemplary system, the intermediate target temperature can be a temperature that is above the deposition temperature of any depositable salts in the product stream from reactor 102. For example, the intermediate target temperature can be in a range of from about 175°C to about 350°C. If advantageous, second stage heating can be effected by utilizing steam, such as superheated steam.

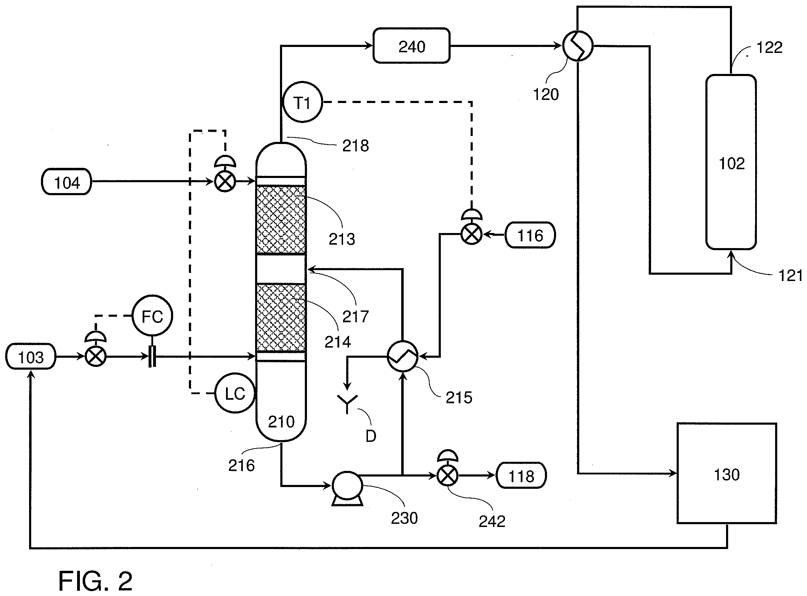

FIG. 2 exemplarily shows a portion of a reactor system. In this variant, saturation of the gaseous reactant stream from source 103 can be facilitated by utilizing a contacting column 210 with one or more saturation sections 213 and vaporization sections 214. Each of sections 213 and 214 typically comprises packing components that facilitate liquid/gas transfer. System 100 can further comprise one or more heaters 215 having a first thermal side fluidly connected to a heating source 116 providing saturated steam in a range of from about 5 bar to about 15 bar. Each of the one or more heaters 215 typically has a second thermal side that is in thermal communication with the first thermal side and fluidly connected to a liquid outlet 216 of column 210 through a bottoms circulation pump 230 and with a heated liquid inlet 217 of column 210. As heated liquid typically comprising the second reactant, such as silicon tetrachloride, is introduced into section 214, at least a portion of the second reactant is vaporized into the gas phase which is introduced into section 213. In section 213, the gas phase becomes saturated with the vaporized first reactant prior to exit through saturated reactant outlet 218.

As in the first variant, a valve 242 can be utilized to periodically discharge accumulated contaminants to discharge or blowdown 118.

Similarly, an optional second heating stage 240, which can use any of hot oil, steam, and electrically generated heat apparatus, can be utilized to raise the temperature of the saturated reactant stream from column 210.

The temperature of the saturated reactant stream can be controlled by utilizing a temperature control system with one or more temperature sensors T1 to actuate the amount of heating steam introduced into heater 215. Steam condensate from heater 215 can be discharged to drain D. The liquid level in the sump or bottoms section of column 210 can be controlled to a target level by a liquid control system LC, which actuates a valve that regulates a flow rate of the second reactant stream, based on a measured liquid level by one or more sensors. The flow rate of the second reactant stream can likewise be controlled. The flow rate of the first reactant stream into column 210 can be controlled to a target flow rate by a flow control system FC which actuates a valve that regulates a flow rate of the second reactant stream based on a measured flow rate by one or more flow sensors.

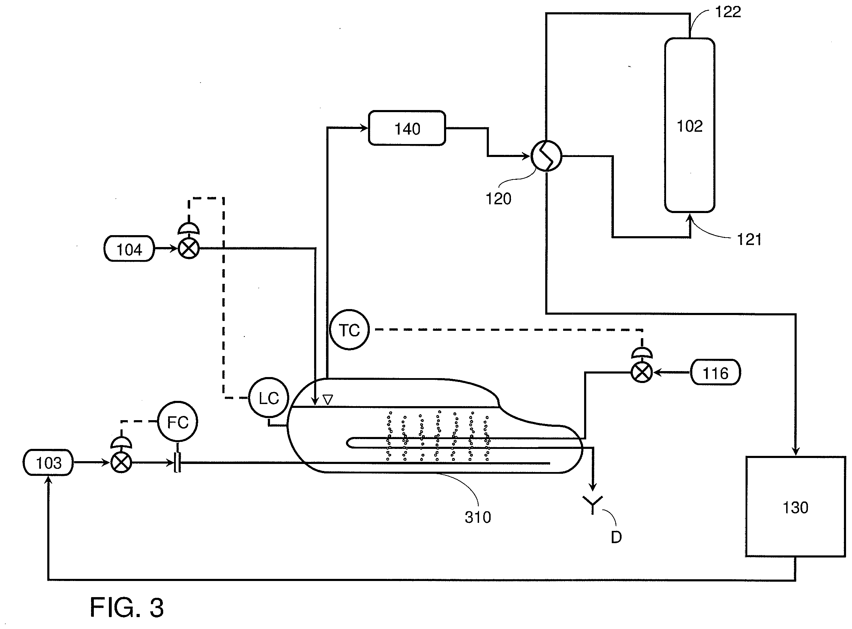

FIG. 3 shows a portion of a contacting system that may be used with the reactor system in accordance with one or more embodiments of the invention. As exemplarily illustrated, the system can comprise a kettle reboiler 310 to facilitate contact of the first reactant from source 103 with the second reactant from source 104 to produce a saturated reactant stream which can be further heated by the product stream from reactor 102, in interchanger 120.

Saturated steam from source 116 can be utilized to heat any hydrogen, silicon tetrachloride, or both in reboiler 310. Any condensate from the saturated steam can be transferred from the heating coils into a drain D or be reheated to saturated steam.

The gaseous first reactant from source 103 is typically contacted with the first reactant by bubbling the gaseous reactant in a pool of the liquid second reactant within reboiler 310. Bubbling can be effected by utilizing a manifold with a plurality of apertures, submerged below the liquid second reactant. As the gaseous first reactant rises through the liquid second reactant, a portion of the second reactant vaporizes into the bubbles of the gaseous second reactant. A headspace above the liquid level thus comprises gaseous first reactant that is saturated with the second reactant, which can then be heated in interchanger 120 by a product stream from reactor 102.

If utilized, second heating stage 140 can raise the temperature of the saturated reactant stream to the intermediate target temperature.

Train 130 can comprise one or more separation unit operations that fractionate components of the product stream from reactor 102. For example, train 102 can comprise one or more distillation columns that separate one or more desired products, such as trichlorosilane, from unused reactant, such as gaseous hydrogen and silicon tetrachloride, in the product stream. The desired product can be stored, delivered, or utilized in other systems. The recovered reactants, such as hydrogen and silicon tetrachloride, can be utilized or supplement any of sources 103 and 104 of reactants.

The present invention involves utilizing one or more control systems to monitor and regulate operation of one or more parameters of any unit operation of the system, at least the temperature of the reactant mixture. For example, the control system can be utilized to monitor and regulate operating conditions of any of the unit operations of system 100 to respective target values. In some cases, the same or a different control system can be utilized to monitor and regulate operating conditions in any of the unit operations of the system. For example, the flow rate of the contact gas stream can be monitored and be controlled to provide one or more predetermined, target, or set point values, or to be dependent on other operating conditions of one or more other unit operations. Other monitored or controlled parameters can be the temperature, the pressure, and the flow rates of any of the streams.

The controller may be implemented using one or more computer systems, which may be, for example, a general-purpose computer or a specialized computer system. Non-limiting examples of control systems that can be utilized or implemented to effect one or more processes of the systems or subsystems of the invention include distributed control systems, such as the DELTA V digital automation system from Emerson Electric Co., and programmable logic controllers, such as those available from Allen-Bradley or Rockwell Automation, Milwaukee, Wisconsin.

Disclosed is the refurbishing or retrofitting of existing system to advantageously incorporate any of the features of the invention. Disclosed is modifying existing trichlorosilane reaction systems to include techniques directed to contacting a gaseous reactant with a liquid reactant to produce a gaseous reactant mixture that has the first reactant and is saturated with the second reactant. Disclosed is retrofitting existing reaction systems to reapportion the heating load of one or more reactant streams to utilize saturated steam while reducing the likelihood of undesirable deposition of components of another stream of the system. For example, disclosed is a method of retrofitting a trichlorosilane reaction system. The method can comprise connecting one or more sources of at least one gaseous reactant that comprises, consists essentially of, or consists of hydrogen, to a liquid-vapor contactor; connecting one or more sources of at least one second reactant that comprises, consists essentially of, or consists of silicon tetrachloride; connecting a reactant mixture outlet of the contactor to a first inlet of a first thermal side of an interchanger; connecting a first outlet of the first thermal side of the interchanger to an inlet of a trichlorosilane reactor. The interchanger typically has a second thermal side that is in thermal communication with the first thermal side, and which has a second inlet that is fluidly connected downstream from an outlet of the trichlorosilane reactor. The method can further comprise connecting an electrical heater between the reactant mixture outlet of the contactor and the first inlet of the interchanger.

Having now described some illustrative embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention. In particular, although many of the examples presented herein involve specific combinations of method acts or system elements, it should be understood that those acts and those elements may be combined in other ways to accomplish the same objectives.

Those skilled in the art should appreciate that the parameters and configurations described herein are exemplary and that actual parameters and/or configurations will depend on the specific application in which the systems and techniques of the invention are used. Those skilled in the art should also recognize or be able to ascertain, using no more than routine experimentation, equivalents to the specific embodiments of the invention. It is therefore to be understood that the embodiments described herein are presented by way of example only and that, within the scope of the appended claims; the invention may be practiced otherwise than as specifically described.

Moreover, it should also be appreciated that the invention is directed to each feature, system, subsystem, or technique described herein and any combination of two or more features, systems, subsystems, or techniques described herein and any combination of two or more features, systems, subsystems, and/or methods, if such features, systems, subsystems, and techniques are not mutually inconsistent, is considered to be within the scope of the invention as embodied in the claims. Further, acts, elements, and features discussed only in connection with one embodiment are not intended to be excluded from a similar role in other embodiments.

As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of' and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A method for preparing trichlorosilane comprising:
heating in a heating section of a reboiler, at least a portion of a gaseous stream comprising hydrogen with saturated steam having a pressure in a range of from 5 bar to 15 bar to provide a heated gaseous stream having sufficient heat of vaporization to saturate the heated gaseous stream comprising hydrogen with a liquid stream comprising silicon tetrachloride;
introducing the liquid stream comprising silicon tetrachloride to the reboiler to provide a desired liquid level in the reboiler;
vaporizing the liquid stream comprising silicon tetrachloride with the heated gaseous stream in a vaporization zone of the reboiler to produce a gaseous reactant stream comprising hydrogen saturated with silicon tetrachloride, the gaseous reactant stream having a temperature of between 125°C to 350°C at an outlet of the vaporization zone;
introducing the gaseous reactant stream into a reactor (102); and
recovering a product stream comprising trichlorosilane, silicon tetrachloride, and hydrogen from the reactor (102).

2. The method of claim 1, further comprising, prior to introducing the gaseous reactant stream into the reactor (102), heating at least a portion of the reactant stream to a temperature in a range of from 175°C to 550°C.

3. The method of claim 1, wherein vaporizing the liquid stream with the heated gaseous stream comprises heating at least a portion of the liquid stream.

4. The method of claim 1, further comprising recovering at least a portion of the hydrogen from the product stream and utilizing at least a portion of the recovered hydrogen to produce the gaseous stream.

5. A reactor system (100) for use in the method of preparing trichlorosilane of claim 1, comprising:
a contactor (110, 210, 310) having a first reactant inlet (111) fluidly connected to a source (103) of a gaseous first reactant, a second inlet (112) fluidly connected to a source (104) of a liquid second reactant, a reactant mixture outlet (116), and a vaporization region (113, 213, 214);
a source (116) of saturated steam fluidly connected to the contactor (110, 210, 310);
a reactor (102) having a reactor inlet (121) fluidly connected downstream from the reactant mixture outlet (116) , and a reactor product outlet (122); and
a control system (LC) configured to regulate a temperature of the reactant mixture to be introduced into the reactant inlet (121) of the reactor (102) to be in a range of from 500°C to 600°C.

6. The reactor system (100) of claim 5, further comprising a heat exchanger (120) having a first thermal side fluidly connecting the reactant mixture outlet (116) and the reactor inlet (121), and a second thermal side fluidly connected downstream from a reactor product outlet (122).

7. The reactor system (100) of claim 5, further comprising a heater (140, 240) fluidly connecting the reactant mixture outlet (116) and the reactor inlet (121).

## Patentansprüche

1. Verfahren zur Herstellung von Trichlorsilan, umfassend:
Erhitzen, in einer Heizsektion eines Verdampfers, mindestens eines Teils eines Gasstroms, umfassend Wasserstoff, mit gesättigtem Dampf, der einen Druck in einem Bereich von 5 bar bis 15 bar aufweist, um einen erhitzten Gasstrom bereitzustellen, der ausreichende Verdampfungswärme aufweist, um den erhitzten Gasstrom, umfassend Wasserstoff, mit einem flüssigen Strom, umfassend Siliciumtetrachlorid, zu sättigen;
Einbringen des flüssigen Stroms, umfassend Siliciumtetrachlorid, in den Verdampfer, um einen gewünschten Flüssigkeitspegel in dem Verdampfer bereitzustellen;
Verdampfen des flüssigen Stroms, umfassend Siliciumtetrachlorid, mit dem erhitzten Gasstrom in einer Verdampfungszone des Verdampfers, um einen Reaktantengasstrom, umfassend Wasserstoff, gesättigt mit Siliciumtetrachlorid, zu erzeugen, wobei der Reaktantengasstrom eine Temperatur zwischen 125 °C bis 350 °C an einem Auslass der Verdampfungszone aufweist;
Einbringen des Reaktantengasstroms in einen Reaktor (102); und
Gewinnen eines Produktstroms, umfassend Trichlorsilan, Siliciumtetrachlorid und Wasserstoff, aus dem Reaktor (102).

2. Verfahren nach Anspruch 1, ferner umfassend, vor dem Einbringen des Reaktantengasstroms in den Reaktor (102), Erhitzen mindestens eines Teils des Reaktantenstroms auf eine Temperatur in einem Bereich von 175 °C bis 550 °C.

3. Verfahren nach Anspruch 1, wobei das Verdampfen des flüssigen Stroms mit dem erhitzten Gasstrom ein Erhitzen mindestens eines Teils des flüssigen Stroms umfasst.

4. Verfahren nach Anspruch 1, ferner umfassend ein Gewinnen mindestens eines Teils des Wasserstoffs aus dem erzeugten Produktstrom und Verwenden mindestens eines Teils des gewonnenen Wasserstoffs, um den Gasstrom zu erzeugen.

5. Reaktorsystem (100) zur Verwendung in einem Verfahren zur Herstellung von Trichlorsilan nach Anspruch 1, umfassend:
einen Kontaktor (110, 210, 310) mit einem ersten Reaktanteneinlass (111), der fluidisch mit einer Quelle (103) eines gasförmigen ersten Reaktanten verbunden ist, einem zweiten Einlass (112), der fluidisch mit einer Quelle (104) eines flüssigen zweiten Reaktanten verbunden ist, einem Reaktantenmischungsauslass (116) und einer Verdampfungsregion (113, 213, 214);
eine Quelle (116) von gesättigtem Dampf, die fluidisch mit dem Kontaktor (110, 210, 310) verbunden ist;
einen Reaktor (102) mit einem Reaktoreinlass (121), der fluidisch stromabwärts von dem Reaktantenmischungsauslass (116) angeschlossen ist, und einem Reaktorproduktauslass (122); und
ein Steuersystem (LC), das ausgelegt ist, um eine Temperatur der Reaktantenmischung, die in den Reaktanteneinlass (121) des Reaktors (102) einzubringen ist, zu regeln, um in einem Bereich von 500 °C bis 600 °C zu liegen.

6. Reaktorsystem (100) nach Anspruch 5, ferner umfassend einen Wärmetauscher (120) mit einer ersten thermischen Seite, die fluidisch den Reaktantenmischungsauslass (116) und den Reaktoreinlass (121) verbindet, und einer zweiten thermischen Seite, die fluidisch stromabwärts von einem Reaktorproduktauslass (122) angeschlossen ist.

7. Reaktorsystem (100) nach Anspruch 5, ferner umfassend einen Heizer (140, 240), der fluidisch den Reaktantenmischungsauslass (116) und den Reaktoreinlass (121) verbindet.

## Revendications

1. Procédé pour préparer du trichlorosilane consistant :
à chauffer, dans une section de chauffage d'un rebouilleur, au moins une partie d'un flux gazeux comprenant de l'hydrogène avec de la vapeur saturée ayant une pression dans une plage allant de 5 bars à 15 bars pour fournir un flux gazeux chauffé ayant de la chaleur suffisante de vaporisation pour saturer le flux gazeux chauffé comprenant de l'hydrogène avec un flux liquide comprenant du tétrachlorure de silicium ;
à introduire le flux liquide comprenant du tétrachlorure de silicium dans le rebouilleur pour fournir un niveau de liquide souhaité au rebouilleur ;
à vaporiser le flux liquide comprenant du tétrachlorure de silicium avec le flux gazeux chauffé dans une zone de vaporisation du rebouilleur pour produire un flux de réactif gazeux comprenant de l'hydrogène saturé avec du tétrachlorure de silicium, le flux de réactif gazeux ayant une température comprise entre 125 °C et 350 °C au niveau d'une sortie de la zone de vaporisation ;
à introduire le flux de réactif gazeux dans un réacteur (102) ; et
à récupérer un flux de produit comprenant du trichlorosilane, du tétrachlorure de silicium et de l'hydrogène à partir du réacteur (102).

2. Procédé selon la revendication 1, consistant en outre, avant d'introduire le flux de réactif gazeux dans le réacteur (102), à chauffer au moins une partie du flux de réactif à une température dans une plage allant de 175 °C à 550 °C.

3. Procédé selon la revendication 1, dans lequel la vaporisation du flux liquide avec le flux gazeux chauffé consiste à chauffer au moins une partie du flux liquide.

4. Procédé selon la revendication 1, consistant en outre à récupérer au moins une partie de l'hydrogène à partir du flux de produit et à utiliser au moins une partie de l'hydrogène récupéré pour produire le flux gazeux.

5. Système de réacteur (100) destiné à être utilisé dans le procédé de préparation du trichlorosilane selon la revendication 1, comprenant :
un contacteur (110, 210, 310) ayant une première entrée de réactif (111) raccordée de manière fluidique à une source (103) d'un premier réactif gazeux, une seconde entrée (112) raccordée de manière fluidique à une source (104) d'un second réactif liquide, une sortie de mélange de réactifs (116) et une région de vaporisation (113, 213, 214) ;
une source (116) de vapeur saturée raccordée de manière fluidique au contacteur (110, 210, 310) ;
un réacteur (102) ayant une entrée de réacteur (121) raccordée de manière fluidique en aval de la sortie de mélange de réactifs (116), et une sortie de produit de réacteur (122) ; et
un système de commande (LC) configuré pour réguler une température du mélange de réactifs pour être introduit dans l'entrée de réactif (121) du réacteur (102) pour être dans une plage allant de 500 °C à 600 °C.

6. Système de réacteur (100) selon la revendication 5, comprenant en outre un échangeur de chaleur (120) ayant un premier côté thermique reliant de manière fluidique la sortie de mélange de réactifs (116) et l'entrée de réacteur (121) et un second côté thermique relié de manière fluidique en aval de la sortie de produit de réacteur (122).

7. Système de réacteur (100) selon la revendication 5, comprenant en outre un dispositif de chauffage (140, 240) reliant de manière fluidique la sortie de mélange de réactifs (116) et l'entrée de réacteur (121).
